# EUROPEAN PATENT APPLICATION

(11) **EP 1 408 400 A2**
(43) Date of publication of application: **14.04.2004**
(21) Application number: 03090336.3
(22) Date of filing: 08.10.2003
(51) Int. Cl.: G06F 3/033

(54) **Touch-pad for use on a portable electronic device**

(30) Priority: 09.10.2002 GB 0223456
(71) Applicant: NEC CORPORATION, Tokyo (JP)
(72) Inventor: Garroch, Jamie c/o NEC Technologies (UK) Ltd., Berkshire, RG2 0TD (GB)
(74) Representative: Patentanwälte Wenzel & Kalkoff

(57) **Abstract**

A portable electronic device 10 comprising a display 100 on a front face of the device on which selectable functions may be displayed and selected by a user and a touch pad provided on a rear face of the device for a user to select the functions.

## Description

The present invention relates to the incorporation of touch-pad technology onto a portable electronic device.

Development of software for portable electronic devices, and in particular mobile telecommunication devices, has enabled portable devices to incorporate multiple functions including phone books, diaries and text messaging.

The functions are selected from menus which are displayed on the screen of the communication device. The increasing number of functions provided by these devices have required the menus to increase both in size and in complexity and often a user may have to make multiple selections in order to access a required function. In order to provide the user with a larger screen, to allow more information to be displayed, some mobile devices include touch sensitive screens, which allow the user to select a feature by simply touching the screen rather than by using the keypad. Such devices require a reduced size keypad, or in some cases no keypad at all, and therefore have sufficient room to accommodate a larger display screen. Touch sensitive screens are also incorporated on devices with full keypads. Typically the user is required to touch the screen to identify the function and tap the screen to confirm his selection.

We have appreciated that there are several drawbacks with touch sensitive display screens on mobile devices. Typically, display screens on mobile devices are not more than a few cm square and include a large amount of information. Consequently, the icons are small and it is difficult to select accurately the required function using a finger. Furthermore, when moving a finger over the front of the display, the display is obscured which increases the possibility of making an erroneous selection. If the user is required to tap the screen to select the function there is a possibility that he will tap the screen at a different position which may either lead to selection of an non-required function or delay the selection procedure. Excessive touching of the screen may also make the screen dirty and greasy.

Preferred embodiments of the present invention seek to overcome these problems by providing a touch-pad on the rear face of the mobile communication device which has a display on the front face of the device. The unit includes circuitry linking the touch-pad to the display, which may be software controlled. This provides a selection cursor on the display screen which is controlled by the touch-pad.

Preferred embodiments further include a selection button positioned on the unit. When the selection cursor identifies the required function, the user can press the selection button to confirm selection and to activate the required function.

Preferably the touch pad is positioned substantially behind the area on the front face on which the display is positioned, such that the position of a user's finger on the touch pad substantially corresponds to the position of the cursor on the display.

The invention is defined in its various aspects in the appended claims to which reference should now be made.

Embodiments of the present invention will now be described in detail by way of example with reference to the accompanying drawings, in which:
Figure 1 is a representation of a mobile communication device having a touch pad positioned on the rear of the device.
Figure 2 is a representation of a mobile communication device having a touch pad positioned on the rear face of the device in use.
Figure 3 is a representation of the display of the mobile telecommunication device during use.

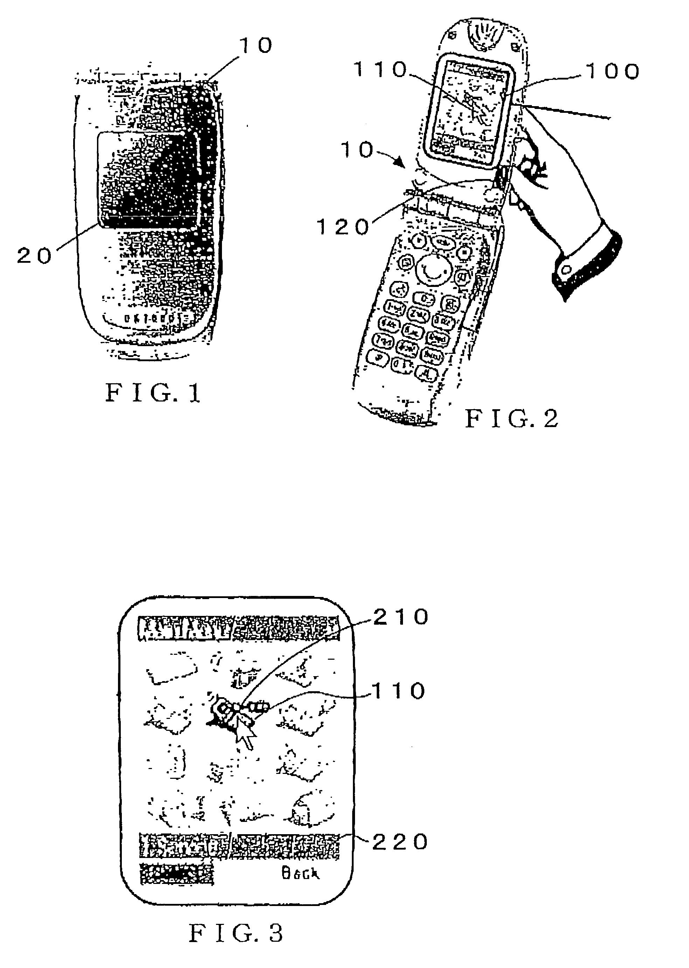

Figure 1 shows the position of the touch pad 20 on the rear face of the mobile device 10. In preferred embodiments, the touch pad 20 is positioned directly behind the display screen and preferably has the same dimensions as the display screen. Further embodiments may include the touch-pad positioned at any convenient. position on the rear face of the device. Preferably, a capacitance sensing touch pad is used in which two layers of fine electrical conductors are arranged in a grid and positioned beneath a sealed surface. When the user touches the pad the fingertip distorts the electric field at the point of contact. The exact position of the point of contact is identified by scanning the grid and measuring the strength of the distortion for each conductor. Such devices are known. In further embodiments of the present invention different types of touch sensitive technology, including resistive systems and acoustic wave systems, may be used.

Figure 2 shows the present invention in use. The touch pad is positioned on the rear face of the unit 10 to enable a user to hold the unit in one hand and be able to control the touch-pad while viewing the entire display 100. When the touch pad is touched, the device. identifies the point of contact. The device includes circuitry which may be software controlled which translates the point of contact on the touch-pad to a corresponding position on the display 100. The software then generates a cursor 110 on the display in the corresponding position. The user is able to control the position of the cursor by moving his finger around the touch-pad while maintaining contact with the touch-pad.

Embodiments including a touch-pad with the same dimensions as the display positioned directly behind the display are particularly easy to control since the position of the cursor on the display will correspond substantially to the position of the user's fingertip on the rear face and may correspond exactly to the position.

Typically, icons will be displayed on the screen and each icon represents a function. As the cursor passes over an icon, that icon may be highlighted. Further embodiments include a selection bar to indicate which function is presently highlighted and available for selection.

Preferred embodiments also include a confirmation button 120. Once the user has highlighted the required function, he may press the confirmation button 120 to confirm selection of that function. The confirmation button will operate in a similar way to the buttons on a mouse for a PC. The confirmation button may also allow the user to execute 'click' and 'drag-lock' operations.

The confirmation button may be positioned at any position on the unit. Preferred embodiments include the button on the side of the device to facilitate easy access by the user's thumb or finger when holding the device in one hand. In devices without a confirmation button, confirmation of selection may be made by tapping the pad after highlighting the required icon.

Figure 3 is a representation of the display screen in a preferred embodiment of the invention. The display screen shows the selection cursor 100 which is controlled by the user on the touch pad. In this embodiment the highlighted function 210 is indicated on a selection bar 220 on the screen. The confirmation button is pressed to confirm selection of the highlighted function.

In embodiments including both a touch pad and a keypad, the user can select whether to use the touch pad or the keypad. Such devices will include a means to select whether the touch-pad or keypad is active. This may be a dedicated key, switch or any other suitable means. If the device is two piece design, the touch pad may also be locked by closing the device.

Preferably, all devices will include a means for locking the touch pad to avoid erroneous selections when the phone is not in use. The touch pad may be locked using a dedicated key, a switch or any other suitable means.

It will be clear to those skilled in the art that the application of the present invention extends beyond the use of touch-pads on mobile telecommunication devices. Such a system could be incorporated into any handheld electronic device.

## Claims

1. A portable electronic device comprising a display on a front face of the device on which selectable functions may be displayed and selected by a user and a touch pad provided on a rear face of the device for a user to select the functions.

2. A portable electronic device according to claim 1 in which the touch pad is positioned substantially directly behind the display.

3. A portable electronic device according to claim 1 or 2 in which a cursor is presented on the display and is controlled by the user using the touch pad.

4. A portable electronic device according to claim 1, 2 or 3 in which the function which is available for selection is highlighted.

5. A portable electronic device according to claim 1, 2, 3 or 4 in which the touch pad has the same dimensions as the display.

6. A portable electronic device according to claim 1, 2, 3, 4 or 5 in which the device includes a selection button to confirm selection of the selected function.
